# EUROPEAN PATENT APPLICATION

(11) **EP 1 696 148 A2**
(43) Date of publication of application: **30.08.2006**
(21) Application number: 06003173.9
(22) Date of filing: 16.02.2006
(51) Int. Cl.: F16D 65/12

(54) **Brake for vehicle wheels that is provided with a braking disc in sectors**

(30) Priority: 23.02.2005 IT MI20050280
(71) Applicant: Sunstar Logistic Singapore Pte Ltd, Singapore 117684 (SG)
(72) Inventor: Greppi, Bruno, 22036 Erba CO (IT); Brioschi, Cesare, 23851 Galbiate LC (IT)
(74) Representative: Faraggiana, Vittorio

(57) **Abstract**

A brake for a vehicle wheel provided with a disc comprising an element (13, 55) fixed to the wheel and an annular braking track (16, 53) connected to said element and intended to cooperate with pads (14, 51) that extend along a portion of the track to perform braking. The braking track consists of a sequence of sectors (30, 52) connected to the element fixed to the wheel near a periphery (22, 56) of the braking track and adjacent to one another at a front edge (30a, 52a) of a sector and a rear edge of the next sector in a preferential direction, the front edge being tilted with respect to the radial direction so that, when the wheel rotates in the preferential direction, portions of a sector nearer said periphery (22) meet the pads before portions that are further away from said periphery.

## Description

The present invention refers to a disc brake for vehicle wheels, in particular for motorcycles, provided with a braking disc made in sectors.

In the prior art the drawbacks are known that are linked to the great thermal and mechanical stress to which braking discs in disc brakes for vehicle wheels are subjected. The high operating temperatures of the disc due to friction with the pads in fact cause not insignificant heat expansion at the annular braking track of the disc, which can cause deformation, curvature and internal tension such as to damage the brake and prevent it operating correctly.

In order to overcome the drawback, it has been proposed to make the braking track of the disc with a plurality of distinct sectors, connected together in such a way as to have a small degree of freedom in a tangential direction, in order to be able to undergo heat expansion, avoiding deformation outside the disc plane. The proposed connecting systems, nevertheless, were very complicated and expensive to make. Furthermore, it was necessary to have cumbersome pads available arranged continuously along the entire braking track, so as to have the sectors constantly interposed between the two friction surfaces during braking to avoid problems of wear and noise due to misalignment of the sectors with respect to the gap between the two brake pads. A brake of this type, can furthermore hardly be used in the motorcycling field, where typically less cumbersome pads are used that extend only over a limited portion of the braking track.

The general object of the present invention is to overcome the aforementioned drawbacks by providing a brake for vehicle wheels provided with a disc made in sectors that has a simple and cheap structure and is able to withstand great mechanical and thermal stress.

A further object of the invention is to provide a brake provided with a disc in sectors that does not wear out easily and enables brake noise to be minimized.

In view of this object it has been decided to make, according to the invention, a brake for a vehicle wheel provided with a disc comprising an element fixed to the wheel and an annular braking track connected to said element and intended to cooperate with pads that extend along a portion of the track to achieve braking, characterized in that the braking track consists of a sequence of sectors connected to the element fixed to the wheel near a periphery of the braking track and adjacent to one another at a front edge of a sector and a rear edge of the next sector in a preferential direction, the front edge being tilted with respect to the radial direction so that, when the wheel rotates in the preferential direction, portions of a sector nearer said periphery meet the pads before portions that are further away from said periphery.

In order to make the innovative principles of the present invention and its advantages over the prior art clearer, a possible embodiment applying such principles will be disclosed below with the help of the attached drawings. In the drawings:
- figure 1 is a view of a brake made according to the invention,
- figure 2 is an enlarged detail of the preceding figure, showing a pawl connecting the sectors of the disc to the disc part that is fixed to the wheel hub,
- figure 3 shows a section view of part of the disc sectioned along the plane III-III in figure 2,
- figure 4 shows a section view that is similar to the preceding one showing an alternative embodiment of the connection of the sectors to the disc part fixed to the hub,
- figure 5 shows an alternative embodiment of a brake according to the invention.

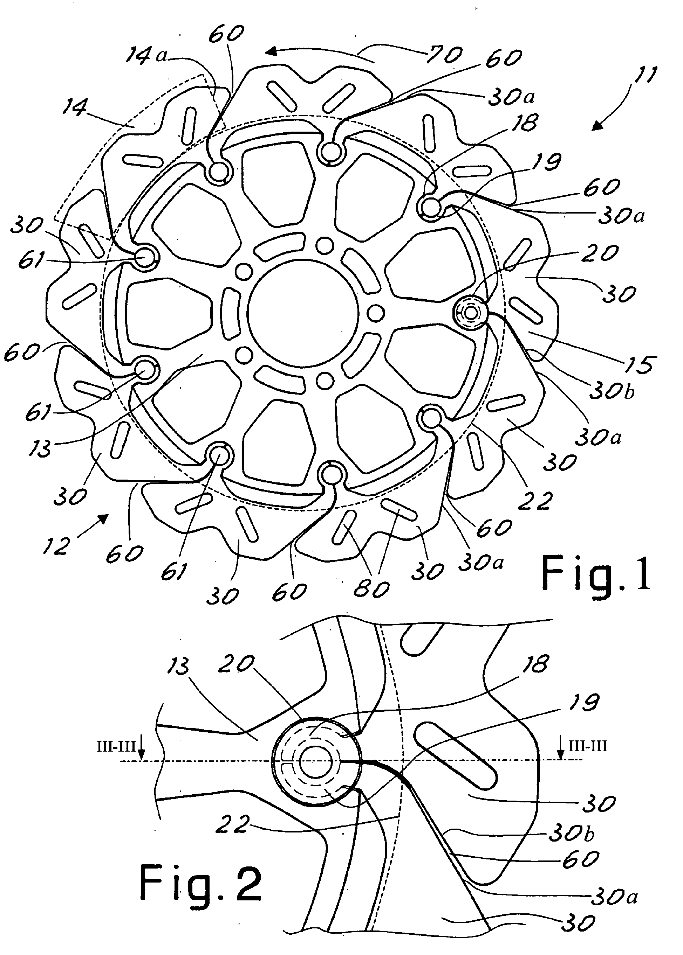

With reference to the figures, in figure 1 there is shown a disc brake 11 for vehicle wheels, in particular for motorcycles, comprising a disc 12 that is integral with the wheel to be made to brake and pads 14 (shown schematically by a broken line in the figure) that are suitable for acting through friction on opposite faces of the disc 12 during braking.

The disc 12 comprises a first element 13 suitable for being fixed to the wheel hub (not shown in the figure), and an annular braking track 15 intended for contact with the friction surfaces of the pads 14 and connected to the element 13 near an internal periphery 22 thereof.

The braking track 15 consists of a sequence of sectors 30 adjacent to one another at a front edge 30a of a sector 30 and of the rear edge 30b of the next sector 30 in the preferential direction indicated by the arrow 70, for example corresponding to the forward movement of a motorcycle.

The front edge 30a of the sectors is tilted with respect to the radial direction so that portions of the sector nearer the periphery 22 (and therefore the connections with the element 13) meet the pads 14 before the more external portions of the sectors 30 when the wheel rotates in the preferential direction 70. Advantageously, the edge 30a is tilted by at least 30° with respect to the radial direction; in the example in the figure, the edge is tilted by about 45° - 55°.

Each sector 30, by gradually coming into contact with the pads 14 starting from the portions thereof nearer the connecting point (and therefore nearer the correct position aligned on the pads) slides into the gap between the two friction surfaces of the pads 14 without impacts even if it is slightly tilted with respect to the plane of the disc, for example due to the presence of minimal play in the connection between the sector and the element integral with the wheel. The sectors that are not perfectly aligned are gradually guided into the position of perfect alignment as the edge 30a enters between the pads. This enables braking noise to be minimized, in addition to minimizing wear to the sectors.

The sectors 30 are separated from one another by narrow slits that cut the braking track 15 for virtually the whole length thereof. The presence of the slits 60 enables the sectors 30 to thermally expand in a tangential direction during braking, without giving rise to deformation or curvature of the disc outside the work plane thereof such as to cause noise or damage to the brake.

The pad 14 extends over a limited portion of the braking track, by an angle at the center greater than that affected by a single sector 30, so as to act at all moments of braking on at least two adjacent sectors in order to distribute the tangential mechanical force better. The edge 14a of the pads 14 that first meets the sectors 30 during braking may be substantially radial with respect to the center of the disc.

Thee slits 60, as well shown in the enlargement in figure 2, have a width that tends to zero near the internal periphery 22 of the braking track, where the tangential expansion of the sector due to heating is less as an absolute value with respect to the portions that are farther from the center of the disc. By contrast, the size of the slits 60 increases as they move away from the periphery 22.

Each sector 30 is connected to the element 13 at two points by means of axial pawls 20 received in seats 61 and positioned outside the braking track along its periphery 22 (in figure 1 only one pawl 20 is shown).

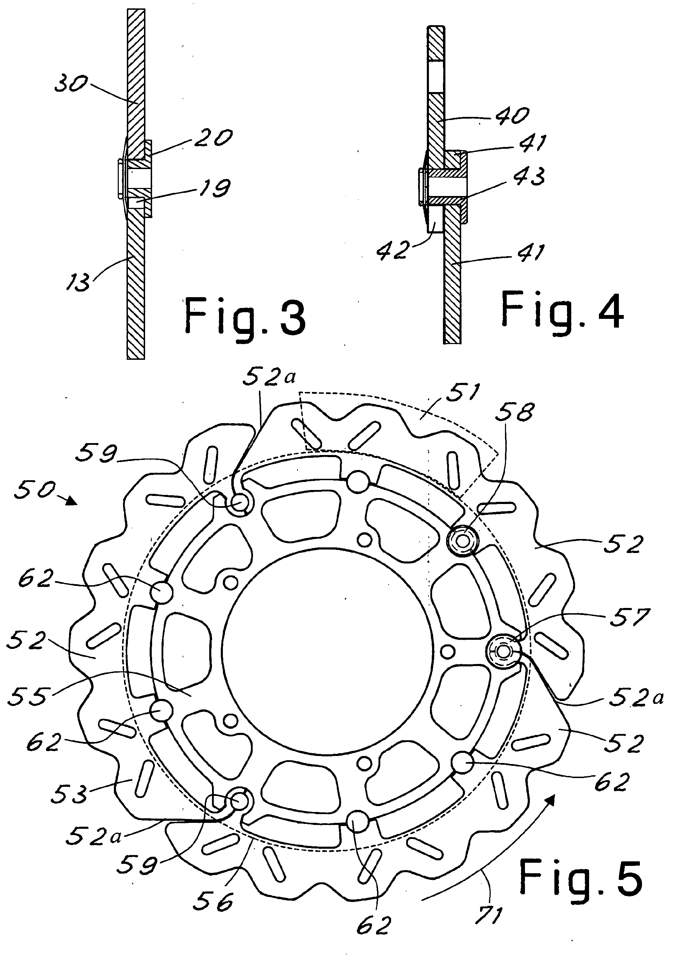

As well shown in figure 2 and in the section in figure 3 made along the plane III-III of figure 2, each seat 61 is half formed by an open semicylindrical circular cavity formed in an arm 18 that extends from a sector 30 and the other half is formed by a similar open cavity formed in an arm 19 that extends from a second sector 30 adjacent to the first. The two arms 18 and 19, in particular, protrude from the rear and front edges that have been brought up close to each other of the two adjacent sectors.

Advantageously, the two cavities in the arms 18 and 19 face one another with their open parts positioned on a radial plane perpendicular to the disc to form a circular cylindrical seat that is axial to the disc.

In the embodiment in figures 1, 2 and 3, the sectors 30 are coplanar to the element 13; the ends of the arms 18 and 19 that form the seat of the pawl 20 have a semicircular shape and are received in a circular axial hole received in the element 13; this hole is open on the side facing the sectors to enable the arms 18, 19 to enter the hole without exiting from the disc plane. The side wall of the hole in the element 13 clasps the semicircular ends of the arms 18, 19, ensuring a connection in the radial and tangential directions with respect to the disc.

At the two opposite ends the pawl 20 has two heads that rest on opposite faces of the disc to ensure the axial connection between sectors and element 13. The two heads completely cover the two arms 18, 19 that form the seat and rest on opposite faces of the element 13. One of the two heads can be obtained, according to known techniques by applying a clip, a Seeger circlip ring or through riveting, after the pawl has been inserted into the seat.

In the disclosed embodiment, a pawl 20 is positioned near the front edge 30a of each sector, so that the portion of the edge 30a nearer the periphery 22 is kept firmly in the correct position to enter the gap between the friction surfaces of the pads 14 without impacts due to misalignment.

In the sectors lightening openings 80 can be obtained, with various shapes and in various quantities, according to known prior-art teachings.

In the embodiment in figure 1 there are nine modular sectors 30; the sectors are almost flat and can be advantageously obtained by blanking.

In figure 4 there is shown, with a section view similar to the one in figure 3, an alternative embodiment of the connection of two sectors 42, 40 (identical to the sectors 30 already disclosed) to the element of the disc 41 fixed to the wheel (similar to the element 13 of the preceding disclosure). This time the braking track is cantilever-mounted with respect to the element 41 fixed to the wheel. The sectors 40 and 42 have arms with ends that are semicircular in shape that are identical to those of the sectors 30; the ends of the arms, however, in this case are not received in a hole in the element fixed to the wheel. The hole obtained in the element 41 is closed and coaxial to the seat formed by the arms that protrude from the sectors, and the side walls thereof are directly in contact with the pawl 43.

In figure 5 there is shown an alternative embodiment of a brake 50 according to the invention. The brake 50 comprises an element 55 that is integral with the wheel hub, a pad 51 and a braking track 53, coplanar to the element 55 and connected to it near an internal periphery 56 thereof. The track 53 is formed of three modular sectors 52 that extend for a third of the round angle each and have front edges 52a tilted with respect to the preferential rotation direction 71 in a similar manner to the front edges 30a of the sectors 30.

Each sector 52 is connected to the element 55 by two pawls 57 (in the figure only one thereof is shown) received in seats 59, arranged at the slits between two adjacent sectors and completely similar to the seats 61 already disclosed for the embodiment in figure 1. Furthermore, each sector 52 is connected at another two points of the element 55 by two pawls 58 (in the figure only one thereof is shown) received in seats 62, each one of which is formed by two open semicylindrical cavities, obtained respectively on the sector 52 and on the element 55 and facing a tangential plane with respect to the disc.

Overall, there are still nine connecting pawls arranged along the internal periphery of the braking track that are equidistant from one another.

At this point it is obvious how the objects of the present invention have been reached. A disc brake has in fact been supplied that is provided with a braking track that is able to withstand great mechanical and thermal stress, without undergoing deformation or curvature that can cause noise or damage to the brake.

The brake according to the invention has a simple structure, is cheap to make and has limited overall dimensions.

Furthermore, owing to the special shape of the sectors that form the braking track, it is possible to ensure perfect alignment of the sectors with the gap between the brake pads, preventing impacts between the edge of the sectors and the pads.

A connecting system of the sectors has also been created that is cheap and simple in structure, using a limited number of connecting pawls.

Naturally, the above disclosure of an embodiment applying the innovative principles of the present invention has been given by way of example of these principles and must not therefore be taken to limit the scope of what is claimed herein.

The element fixed to the wheel could also not be fixed to the hub, but to the periphery of the wheel and the braking track could be arranged internally with respect to the element integral with the wheel.

The number of sectors could also be different from what has been disclosed and could also not be identical modular sectors, as shown in the figures.

The external peripheral profile of each sector could be shaped as a circle arc or have recesses according to known techniques.

Also the type of connection of the sectors to the element fixed to the wheel could be made in different forms compared with what has been disclosed.

## Claims

1. Brake for a vehicle wheel provided with a disc comprising an element (13, 55) fixed to the wheel and an annular braking track (16, 53) connected to said element and intended to cooperate with pads (14, 51) that extend along a portion of the track to perform braking, **characterized in that** the braking track consists of a sequence of sectors (30, 52) connected to the element fixed to the wheel near a periphery (22, 56) of the braking track and adjacent to one another at a front edge (30a, 52a) of a sector and a rear edge of the next sector in a preferential direction (70), the front edge being tilted with respect to the radial direction so that, when the wheel rotates in the preferential direction, portions of a sector nearer said periphery (22) meet the pads before portions that are further away from said periphery.

2. Brake according to claim 1, **characterized in that** the front edge (30a, 52a) of the sector is tilted with respect to the radial direction of the disc by at least 30°.

3. Brake according to claim 1, **characterized in that** the element fixed to the wheel is fixed to the wheel hub and the braking track is connected to it along the internal periphery thereof.

4. Brake according to claim 3, **characterized in that** the edges that have been brought up close to each other of the two adjacent sectors have a distance that tends to zero near the internal periphery of the braking track and increases with the increase of the distance from the latter.

5. Brake according to claim 1, **characterized in that** each sector (30, 52) is connected to the element (13, 55) fixed to the wheel near the front edge (30a, 52a) thereof.

6. Brake according to claim 1, **characterized in that** said sectors (30, 52) are connected to the element (13, 55) fixed to the wheel by means of pawls that are axial to the disc.

7. Brake according to claim 6, **characterized in that** from each front and rear edge of a sector (30, 52) an arm (18, 19) extends, bearing a cavity suitable for corresponding to a cavity in an arm of an adjacent sector to form receiving seats (61) of the pawls.

8. Brake according to claim 7, **characterized in that** the sectors are coplanar to the element (13) of the disc fixed to the wheel, on which an axial hole is present that is open on the side facing the track, the side wall of the hole clasping the parts of the arms of two adjacent sectors that form a seat (61) making a connection in the directions that are coplanar to the disc.

9. Brake according to claim 7, **characterized in that** said cavities are semicylindrical open cavities and are intended to face a radial plane perpendicular to the disc to form axial cylindrical seats (61).

10. Brake according to claim 9, **characterized in that** the sectors are cantilever-mounted with respect to the element fixed to the wheel, on which element holes are present that are coaxial to said seats formed by the arms of the sectors to receive the pawls arranged therein.

11. Brake according to claim 6, **characterized in that** there are nine pawls, equidistantly spaced from one another along the periphery of the braking track.

12. Brake according to claim 1, **characterized in that** the sectors are three or nine.

13. Brake according to claim 1, **characterized in that** said sectors (30, 52) are modular.
